(19) Europäisches Patentamt
European Patent Office
Office européen des brevets

(11) **EP 2 870 018 B1**

(12) **FASCICULE DE BREVET EUROPEEN**

(45) Date de publication et mention
de la délivrance du brevet:
**03.10.2018 Bulletin 2018/40**

(21) Numéro de dépôt: **13744683.7**

(22) Date de dépôt: **03.07.2013**

(51) Int Cl.:
*B60L 11/18* (2006.01)    *H02P 21/22* (2016.01)
*B60L 15/02* (2006.01)    *B60L 3/00* (2006.01)
*H02P 21/14* (2016.01)

(86) Numéro de dépôt international:
**PCT/FR2013/051570**

(87) Numéro de publication internationale:
**WO 2014/006329 (09.01.2014 Gazette 2014/02)**

(54) **PROCÉDÉ DE COMMANDE D'UN GROUPE MOTOPROPULSEUR ET SYSTÈME CORRESPONDANT**

VERFAHREN ZUR STEUERUNG EINES ANTRIEBSSTRANGES UND ENTSPRECHENDES SYSTEM

METHOD FOR CONTROLLING A POWER TRAIN AND CORRESPONDING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.07.2012 FR 1256368**
           **17.07.2012 US 201261672426 P**

(43) Date de publication de la demande:
**13.05.2015 Bulletin 2015/20**

(73) Titulaire: **Renault S.A.S.**
**92100 Boulogne-Billancourt (FR)**

(72) Inventeur: **MERIENNE, Ludovic**
**F-91190 Gif-sur-Yvette (FR)**

(56) Documents cités:
**EP-A2- 1 311 060**    **EP-A2- 2 043 253**
**US-A- 5 115 174**    **US-A1- 2006 012 329**

- **VASILE COROBAN-SCHRAMEL ET AL: "Active-Flux-Based Motion-Sensorless Vector Control of Biaxial Excitation Generator/Motor for Automobiles", IEEE TRANSACTIONS ON INDUSTRY APPLICATIONS, IEEE SERVICE CENTER, PISCATAWAY, NJ, US, vol. 47, no. 2, 1 mars 2011 (2011-03-01), pages 812-819, XP011363478, ISSN: 0093-9994, DOI: 10.1109/TIA.2010.2103350**

**Description**

L'invention concerne la commande des moteurs électriques, et en particulier la commande des moteurs électriques de type synchrone à rotor bobiné.

Un moteur électrique de type synchrone à rotor bobiné comprend une partie fixe appelée stator et une partie mobile appelée rotor. Le stator comprend trois bobines décalées de 120 et alimentées en courant alternatif. Le rotor comprend une bobine alimentée en courant continu. Les courants de phase du stator dépendent des résistances et inductances du rotor et du stator ainsi que de l'inductance mutuelle entre le rotor et le stator.

De manière classique, on utilise des signaux de commande pour contrôler les courants du stator et du rotor. On met ainsi en oeuvre une régulation qui dépend des valeurs mesurées des courants.

Si l'un des capteurs fournissant ces valeurs mesurées est défaillant, par exemple en indiquant une valeur d'intensité constamment nulle, la régulation va augmenter la valeur des signaux de commande afin d'augmenter celle du courant. De ce fait, la valeur des signaux de commande peut diverger jusqu'à atteindre des valeurs maximales, ce qui provoque l'apparition de courants de valeur d'intensité particulièrement élevés voire destructeurs. A titre d'exemple, il est possible d'atteindre des valeurs de signaux de commande atteignant 400 volts ce qui provoque l'apparition de courant allant jusque 40 000 ampères. Bien évidemment, de tels courants sont destructeurs pour les transistors utilisés pour la commande, par exemple des transistors de type bipolaire à grille isolée (« IGBT : Insulated Gate Bipolar Transistor » en langue anglaise).

On peut noter qu'il a été proposé dans la demande de brevet japonais JP 2001 268980 et dans le document US 5047699 de réguler des courants continus au moyen d'un modèle de machine électrique.

On peut également se référer au document US 2002 0008492 qui décrit un procédé de détection de défaillance des capteurs.

L'article IEEE intitulé « Active-Flux-Based Motion-Sensorless Vector Control of Biaxial Excitation Generator/Motor for Automobiles » d'auteurs Vasile Coroban-Schramel, Ion Boldea, Gheorghe-Daniel Andreescu et Frede Blaabjerb, décrit un procédé de commande d'une machine électrique comportant un stator, un rotor bobiné à aimants, une régulation des courants rotorique et statoriques pour délivrer des signaux de commande à la machine électrique, les courants à réguler et les signaux de commande étant exprimés dans un repère tournant comprenant une pluralité d'axes. Le procédé décrit comporte une mesure des valeurs des courants du rotor et du stator, et une transformation de ces mesures dans le repère tournant.

Le document EP1311060 décrit un procédé de commande d'un moteur électrique, dans lequel on calcule des courants de phase à partir de courants de consigne dans l'espace de Park en utilisant une transformée inverse. Des courants de phase mesurés sont ensuite comparés à ces courants de phase calculés augmentés ou diminués d'une valeur de seuil prédéfinie.

Un but de la présente invention est d'améliorer la régulation d'un moteur électrique notamment en cas de défaillance des capteurs.

Selon un mode de mise en oeuvre, il est proposé un procédé de commande d'un groupe motopropulseur équipant un véhicule automobile et comprenant un moteur électrique muni d'un rotor et d'un stator, dit procédé comprenant une régulation des courants du rotor et du stator délivrant des signaux de commande au moteur électrique, lesdits courants à réguler et lesdits signaux de commande étant exprimés dans un repère tournant et comprenant une pluralité d'axes, par exemple le repère de Park.

Selon une caractéristique générale, le procédé comprend une mesure des valeurs des courants du rotor et du stator, par exemple fournies par un ensemble de capteurs, une transformation de ces mesures dans ledit repère tournant, une détermination de bornes minimales et maximales pour chacun des courants en fonction desdits signaux de commande, et une comparaison des signaux mesurés avec lesdites bornes minimales et maximales.

Ainsi, on détermine des bornes minimales et maximales, indépendamment des valeurs mesurées qui peuvent être fausses en cas de défaillance des capteurs. Ces bornes indiquent notamment la plage dans laquelle doit se situer le courant lorsque l'on applique les signaux de commande. Si lors de la comparaison les signaux mesurés sont en dehors des bornes, alors on peut considérer qu'un ou plusieurs capteurs sont défaillant et qu'il est préférable de limiter l'utilisation du moteur. On obtient donc un fonctionnement davantage sécurisé et une amélioration de la régulation.

La détermination des bornes minimales et maximale peut être mise en oeuvre au moyen d'un modèle du moteur. Ce modèle peut comprendre un ensemble d'équations liant les signaux de commande aux courants. Ces équations s'appliquent aux signaux de commande et aux courants projetés dans le repère de Park, et elles peuvent dépendre de paramètres tels que les valeurs des résistances et d'inductance dans le repère de Park, les valeurs d'inductances mutuelles ou encore la fréquence des signaux électriques sinusoïdaux.

Le procédé peut comprendre, préalablement à l'étape de détermination des bornes minimales et maximales, une résolution d'équations du modèle du moteur en régime stabilisé comprenant une étape de calibration.

En régime stabilisé, on obtient des équations plus simples à résoudre et de premier ordre entre les courants et les signaux de commande. Après des étapes de calibration, on peut déterminer tous les paramètres des équations et notamment leurs valeurs minimales et maximales pour obtenir lesdites bornes minimales et maximales pour chacun des courants (qui ne dépendent que des signaux de commande).

En variante, le procédé peut comprendre, préalablement à l'étape de détermination des bornes minimales et maximales, une détermination de fonctions de transfert fixant les valeurs de courants pour chaque signal de commande et une détermination de fonctions enveloppant lesdites fonctions de transfert dépendant de paramètres, lesdits paramètres étant déterminés par une calibration.

Lesdites fonctions enveloppant les fonctions de transfert permettent de donner des bornes minimales et maximales aux valeurs de courant qui dépendent notamment de la fréquence électrique. On obtient ainsi une meilleure détermination par rapport à la variante précédente dans laquelle on était en régime stabilisé.

Selon un mode de réalisation, il est proposé un système de commande d'un groupe motopropulseur équipant un véhicule automobile et comprenant un moteur électrique muni d'un rotor et d'un stator, des moyens de régulation des courants du rotor et du stator délivrant des signaux de commande au moteur électrique, lesdits courants à réguler et lesdits signaux de commande étant exprimés dans un repère tournant et comprenant une pluralité d'axes.

Selon une caractéristique générale, le système comprend des moyens de mesure des valeurs des courants du rotor et du stator, des moyens de transformation de ces mesures dans ledit repère tournant, des moyens de détermination de bornes minimales et maximales pour chacun des courants en fonction desdits signaux de commande, et des moyens de comparaison des signaux mesurés avec lesdites bornes minimales et maximales.

Les moyens de détermination des bornes minimales et maximales peuvent comprendre un modèle du moteur.

Le système peut comprendre des moyens pour résoudre un ensemble d'équations du modèle en régime stabilisé.

En variante, le système peut comprendre des moyens de détermination de fonctions de transfert fixant les valeurs de courants pour chaque signal de commande et des moyens de détermination de fonctions enveloppant lesdites fonctions de transfert dépendant de paramètres.

D'autres buts, caractéristiques et avantages apparaîtront à la lecture de la description suivante donnée uniquement en tant qu'exemple non limitatif et faite en référence aux dessins annexés sur lesquels :

- la figure 1 illustre des étapes d'un procédé de commande d'un groupe motopropulseur électrique selon l'invention,
- la figure 2 illustre le résultat d'une première variante selon un mode de mise en oeuvre et de réalisation de l'invention,
- les figures 3 à 5 illustrent le résultat d'une deuxième variante selon un mode de mise en oeuvre et de réalisation de l'invention.

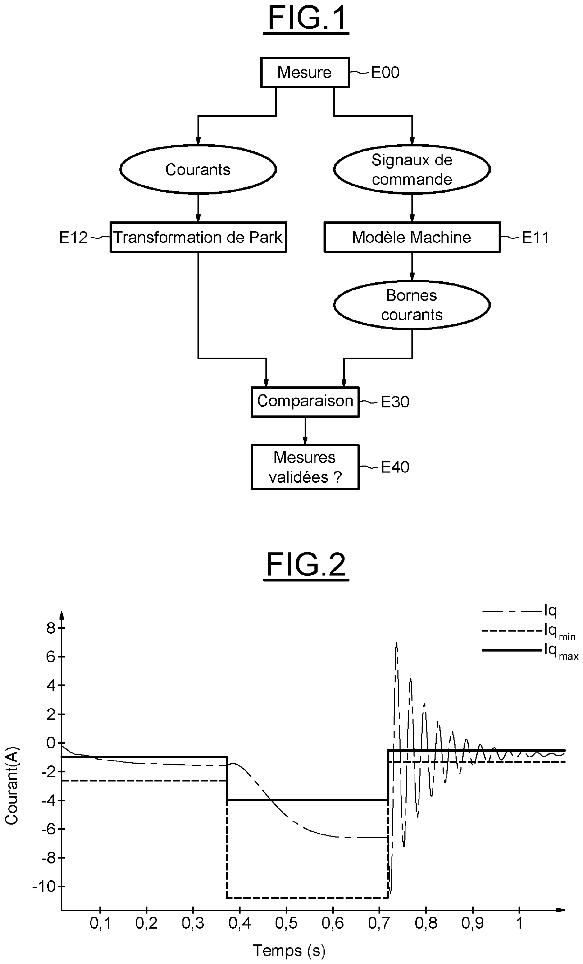

Sur la figure 1, on a représenté de manière schématique des étapes de mise en oeuvre d'un procédé de commande d'un groupe motopropulseur équipant un véhicule automobile et comprenant un moteur électrique. Le procédé comprend une première étape de mesure des courants circulants dans le rotor et dans le stator (étape E00), ce qui permet d'obtenir d'une part les valeurs des courants, et d'autre part les signaux de commandes, c'est-à-dire les tensions appliquées pour obtenir ces courants. On peut élaborer au moyen des signaux de commande des bornes minimales et maximales de valeurs de courants (étape E11), par exemple au moyen d'un modèle du moteur ou de la machine électrique. Par ailleurs, on peut appliquer une transformation de Park sur les courants mesurés (étape E12). Enfin, lors d'une étape E30 de comparaison, on vérifie si les valeurs mesurées et transformées sont comprises dans les bornes. Si elles le sont (étape E40), on peut estimer qu'il n'y a pas de défaillance des capteurs et que l'on peut continuer la régulation, si ce n'est pas le cas, on peut limiter la régulation de manière à protéger le moteur et augmenter la sécurité.

On va maintenant décrire l'obtention des bornes, notamment au moyen d'un modèle du moteur.

Dans le repère de Park qui comprend trois axes notés d, q et f, un groupe motopropulseur comprenant un moteur synchrone est régi par les équations suivantes :

$$V_d = R_s \cdot I_d + L_d \cdot \frac{dI_d}{dt} + M_f \cdot \frac{dI_f}{dt} - \omega_r \cdot L_q \cdot I_q$$

$$V_q = R_s \cdot I_q + L_q \cdot \frac{dI_q}{dt} + \omega_r \left( L_d \cdot I_d + M_f \cdot I_f \right) \qquad (Eq.1)$$

$$V_f = R_f \cdot I_f + L_f \cdot \frac{dI_f}{dt} + \alpha \cdot M_f \cdot \frac{dI_d}{dt}$$

Avec :

$V_d$ : signal de commande du moteur électrique sur l'axe d

$V_q$ : signal de commande du moteur électrique sur l'axe q

Vf : signal de commande du moteur électrique sur l'axe f

$L_d$ : Inductance équivalente d'induit sur l'axe d.

$L_q$ : Inductance équivalente d'induit sur l'axe q.

$L_f$ : Inductance du rotor.

$R_s$ : Résistance équivalente d'enroulements statoriques.

$R_f$ : Résistance du rotor.

$M_f$ : Mutuelle inductance entre le stator et le rotor.

$I_d$ : Courant sur l'axe d.

$I_q$ : Courant sur l'axe q.

$I_f$ : Courant sur l'axe f.

$\alpha$ : Constante de conservation de puissance dans la transformée de Park, par exemple égale à 1 ou à 1,5.

$\omega_r$ : Vitesse de rotation du champ magnétique de la machine en rad/s (pour une machine synchrone, celle-ci est égale à la vitesse de rotation du rotor multiplié par le nombre de paires de pôles de la machine)

Afin de simplifier la résolution de ces équations pour fournir des bornes minimales et maximales de valeurs de courant, on peut réécrire ces équations en régime stabilisé, c'est-à-dire en considérant que les termes dérivés sont nuls dans l'équation Eq. 1. On peut ainsi exprimer chaque courant en fonction des signaux de commande et de la vitesse :

$$\bar{I}_d = \frac{R_S}{R_S^2 + \omega^2 L_d L_q}\bar{V}_d + \frac{\omega L_q}{R_S^2 + \omega^2 L_d L_q}\bar{V}_q - \frac{\omega^2 L_q M_f}{Rf(R_S^2 + \omega^2 L_d L_q)}\bar{V}_f$$

$$\bar{I}_q = \frac{\omega L_d}{R_S^2 + \omega^2 L_d L_q}\bar{V}_d + \frac{Rs}{R_S^2 + \omega^2 L_d L_q}\bar{V}_q - \frac{\omega^2 R_s M_f}{Rf(R_S^2 + \omega^2 L_d L_q)}\bar{V}_f \qquad (Eq.2)$$

$$\bar{I}_f = \frac{1}{R_f}\bar{V}_f$$

On peut réécrire ces équations en regroupant certains termes :

$$\bar{I}_d = G_{d/d}\bar{V}_d + G_{d/q}\bar{V}_q + G_{d/f}\bar{V}_f$$

$$\bar{I}_q = G_{q/d}\bar{V}_d + G_{q/q}\bar{V}_q + G_{q/f}\bar{V}_f \quad (Eq.3)$$

$$\bar{I}_f = G_{f/f}\bar{V}_f$$

En outre, on peut connaître les différents paramètres d'un moteur ou d'une machine en mettant en oeuvre des étapes de calibration ou essais, qui permettent d'obtenir des valeurs minimales et maximales de ces paramètres (qui peuvent notamment dépendre de la température). On obtient alors des valeurs minimales et maximales pour chaque paramètre noté $G_{x/x}$ (avec x choisi parmi d, q et f). Ces valeurs peuvent donc fournir, pour toutes valeurs de signaux de commande et à tout instant, des bornes minimales et maximales de courants. On peut ainsi mettre en oeuvre l'étape E30 de comparaison.

On a représenté sur la figure 2 un exemple d'évolution du courant $I_q$ entouré de ses bornes minimales et maximales $I_{qmin}$ et $I_{qmax}$. On peut noter qu'au moins dans les périodes stabilisées (par exemple pendant lesquelles les signaux de commande ne varient pas), le signal $I_q$ est bien compris entre les deux bornes. Une mesure d'une valeur en dehors de ces bornes peut indiquer par exemple une défaillance d'un capteur.

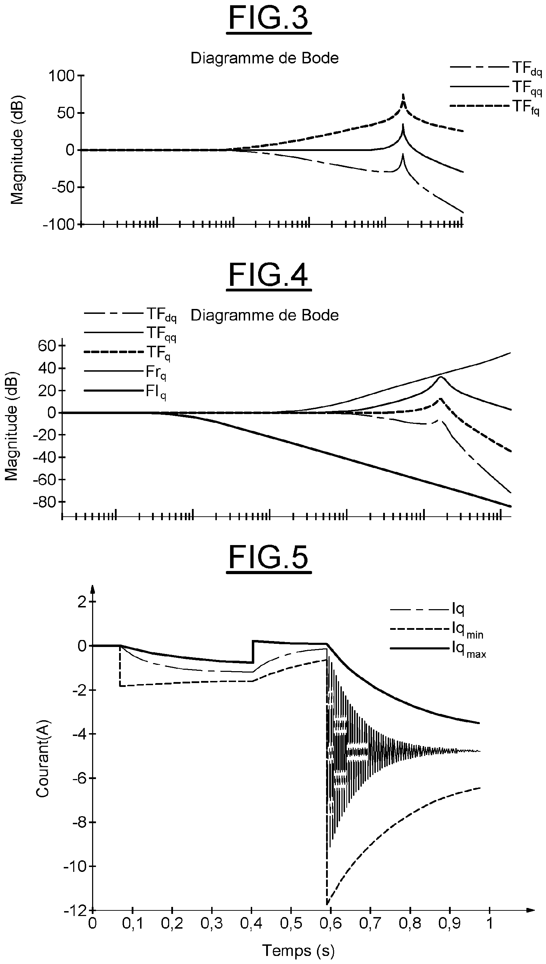

On va maintenant décrire une autre variante de l'invention bien adaptée pour les régimes non stabilisés, en se référant notamment aux figures 3 à 5.

Sur la figure 3, on a représenté les fonctions de transfert normalisées entre chaque signal de commande et le courant $I_q$, c'est-à-dire le courant principal destiné à fournir le couple. Plus précisément, on a représenté la fonction de transfert entre le signal de commande $V_d$ et le courant $I_q$ (notée $TF_{dq}$), la fonction de transfert entre le signal de commande $V_q$ et le courant $I_d$ (notée $TF_{qq}$) et la fonction de transfert entre le signal de commande $V_f$ et le courant $I_q$ (notée $TF_{fq}$). Ces fonctions de transfert sont obtenues au moyen de l'équation Eq. 1.

Afin d'obtenir des bornes minimales et maximales du courant, on peut, au vu de la figure 3, choisir deux fonctions (ou filtres) capables d'envelopper ces courbes. On peut par exemple choisir des fonctions du second ordre. En outre, on peut choisir un filtre dit lent, c'est-à-dire ayant un gain inférieur aux fonctions de transfert pour toute fréquence, et un filtre dit rapide, c'est-à-dire ayant un gain supérieur aux fonctions de transfert pour toute fréquence.

A titre d'exemple non limitatif, on peut choisir les filtres suivants notés Fl (filtre lent) et Fr (filtre rapide) :

$$Fr = k + (1-k)z^{-1}$$
$$Fl = \frac{a}{1 + (a-1)z^{-1}} \qquad (Eq.4)$$

Avec :

a, k : paramètres à déterminer
z : élément discret

En mettant en oeuvre des étapes de calibration, pour le courant principal Iq, on peut obtenir des valeurs de paramètres a et k donnant des réponses fréquentielles telles que celles illustrées sur la figure 4. Sur cette figure, on a représenté les fonctions de transfert $TF_{dq}$, $TF_{qq}$ et $TF_{fq}$ déjà représentées sur la figure 3, et on a représenté les fonctions de transfert du filtre lent (notée Flq) et du filtre rapide (notée Frq). On obtient bien une enveloppe inférieure et une enveloppe supérieure pour toute fréquence.

Bien qu'ici on utilise deux paramètres différents, il est tout à fait possible de n'utiliser qu'un seul paramètre afin de simplifier les étapes de calibration et de limiter le stockage d'information.

On peut noter qu'il est préférable de déterminer a et k pour chaque tension pour un des courants. Par exemple, pour le courant $I_q$, on peut prévoir six tables parmi lesquelles trois contiennent des valeurs de a (une pour chaque signal de commande) et trois contiennent des valeurs de k (une pour chaque signal de commande). Les différentes valeurs dans chaque table peuvent être déterminées pour différentes vitesses.

Il convient de noter que pour faciliter les étapes de calibration, on peut écrire les fonctions de transfert en utilisant la transformée de Laplace (avec une variable notée s) comme indiqué ci-après :

$$\frac{I_q}{V_d} = \frac{-\omega(L_d R_f + (L_d L_f - \alpha M_f^2)s)}{Den}$$
$$\frac{I_q}{V_q} = \frac{(R_s + L_d s)(R_f + L_f s)}{Den} \qquad (Eq.5)$$
$$\frac{I_q}{V_f} = \frac{-\omega M_f (R_s + L_d s)}{Den}$$

Avec :

$$Den = R_f(R_s^2 + \omega^2 L_d L_q) + (\omega^2 L_q(L_d L_f - \alpha M_f^2) + R_f R_s(L_d + L_q) + L_f R_s^2)s$$
$$+ (L_d L_q R_f + L_f R_s(L_d + L_q))s^2 + L_d L_q L_f s^3$$

On peut alors déterminer une bonne valeur pour le paramètre k en calculant les gains des fonctions de transfert de l'équation Eq. 5 notamment à la fréquence $\omega$ pour laquelle on obtient un pic sur les figures 3 et 4, cette fréquence pouvant être déterminée par calibration. En outre, on peut obtenir une bonne valeur pour le paramètre a en déterminant le gain pour $\omega$ nul.

On obtient ainsi des filtres lent et rapide formant des enveloppes pour toutes les fréquences possibles. On peut en outre suivre les variations du courant avec ces filtres. Par exemple, si la valeur désirée pour le courant est supérieure à la valeur mesurée, il convient d'utiliser le filtre dit rapide, afin de fournir une borne toujours supérieure au niveau mesuré. Si au contraire, la valeur désirée pour le courant est inférieure à la valeur mesurée, il est nécessaire d'empêcher à la borne de diminuer plus rapidement que le courant, on applique alors le filtre lent : la borne diminue ainsi plus lentement que le courant.

A titre d'exemple, l'application du filtre (qui est un filtre numérique) peut donc être la suivante :

$$s[n] = \begin{cases} ae[n] + (1-a)s[n-1] & si \quad e[n] < s[n-1] \\ ke[n] + (1-k)e[n-1] & si \quad e[n] > s[n-1] \end{cases} \quad (Eq.6)$$

Dans l'équation Eq.6, e représente la donnée en entrée, s la donnée en sortie filtrée.

On obtient ainsi des bornes telles que celles illustrées sur la figure 5 pour laquelle le courant $I_q$ est entourée par les enveloppes $I_{qmin}$ et $I_{qmax}$ qui varient de la même manière que le courant. On peut noter que le courant Iq ne franchit jamais les bornes, ce qui correspond à un fonctionnement correct des capteurs.

On peut noter que les deux variantes décrites ci-avant sont particulièrement bien adaptées à être embarquées dans un système de commande de groupe motopropulseur. En effet, ces systèmes de commande comprennent généralement des moyens de calcul de type microprocesseur ayant des capacités de calcul et de mémoire limitées.

**Revendications**

1. Procédé de commande d'un groupe motopropulseur équipant un véhicule automobile et comprenant un moteur électrique muni d'un rotor et d'un stator, ledit procédé comprenant une régulation des courants du rotor et du stator $(I_d, I_q, I_f)$ délivrant des signaux de commande $(V_d, V_q, V_f)$ au moteur électrique, lesdits courants à réguler et lesdits signaux de commande étant exprimés dans un repère tournant et comprenant une pluralité d'axes (d, q, f), une mesure (E00) des valeurs des courants du rotor et du stator, une transformation (E12) de ces mesures dans ledit repère tournant, **caractérisé en ce qu'**il comprend une détermination (E11) de bornes minimales et maximales pour chacun des courants en fonction desdits signaux de commande, et une comparaison (E30) des signaux mesurés avec lesdites bornes minimales et maximales.

2. Procédé selon la revendication 1, dans lequel la détermination des bornes minimales et maximales est mise en oeuvre au moyen d'un modèle du moteur.

3. Procédé selon la revendication 1 ou 2, comprenant en outre, préalablement à l'étape de détermination des bornes minimales et maximales une résolution d'équations du modèle du moteur en régime stabilisé comprenant une étape de calibration.

4. Procédé selon la revendication 1 ou 2, comprenant en outre, préalablement à l'étape de détermination des bornes minimales et maximales une détermination de fonctions de transfert fixant les valeurs de courants $(I_d, I_q, I_f)$ pour chaque signal de commande $(V_d, V_q, V_f)$ et une détermination de fonctions enveloppant lesdites fonctions de transfert dépendant de paramètres (a, k), lesdits paramètres étant déterminés par une calibration.

5. Système de commande d'un groupe motopropulseur équipant un véhicule automobile et comprenant un moteur électrique muni d'un rotor et d'un stator, des moyens de régulation des courants du rotor et du stator $(I_d, I_q, I_f)$ délivrant des signaux de commande $(V_d, V_q, V_f)$ au moteur électrique, lesdits courants à réguler et lesdits signaux de commande étant exprimés dans un repère tournant et comprenant une pluralité d'axes (d, q, f), des moyens de mesure des valeurs des courants du rotor et du stator, des moyens de transformation de ces mesures dans ledit repère tournant, **caractérisé en ce qu'**il comprend des moyens de détermination de bornes minimales et maximales pour chacun des courants en fonction desdits signaux de commande, et des moyens de comparaison des signaux mesurés avec lesdites bornes minimales et maximales.

6. Système selon la revendication 5, dans lequel les moyens de détermination des bornes minimales et maximales comprennent un modèle du moteur.

7. Système selon la revendication 5 ou 6, comprenant des moyens pour résoudre un ensemble d'équations du modèle du moteur en régime stabilisé.

8. Système selon la revendication 5 ou 6, comprenant en outre des moyens de détermination de fonctions de transfert fixant les valeurs de courants $(I_d, I_q, I_f)$ pour chaque signal de commande $(V_d, V_q, V_f)$ et des moyens de détermination de fonctions enveloppant lesdites fonctions de transfert dépendant de paramètres (a, k).

**Patentansprüche**

1. Verfahren zum Steuern einer Antriebseinheit, die ein Kraftfahrzeug bestückt und einen mit einem Rotor und mit einem Stator versehenen Elektromotor enthält, wobei das Verfahren die Regelung der Ströme des Rotors und des Stators ($I_d$, $I_q$, $I_f$), die Steuersignale ($V_d$, $V_q$, $V_f$) an den Elektromotor liefern, wobei die zu regelnden Ströme und die Steuersignale in einem Bezugssystem ausgedrückt werden, das dreht und eine Vielzahl von Achsen (d, q, f) enthält, eine Messung (E00) der Werte der Ströme des Rotors und des Stators, eine Umwandlung (E12) dieser Messungen im drehenden Bezugssystem enthält, **dadurch gekennzeichnet, dass** es eine Bestimmung (E11) von minimalen und maximalen Grenzen für jeden der Ströme abhängig von den Steuersignalen und einen Vergleich (E30) der gemessenen Signale mit den minimalen und maximalen Grenzen enthält.

2. Verfahren nach Anspruch 1, wobei die Bestimmung der minimalen und maximalen Grenzen mittels eines Modells des Motors durchgeführt wird.

3. Verfahren nach Anspruch 1 oder 2, das außerdem vor dem Schritt der Bestimmung der minimalen und maximalen Grenzen eine Lösung von Gleichungen des Modells des Motors bei stabilisierter Drehzahl enthält, die einen Kalibrierungsschritt enthält.

4. Verfahren nach Anspruch 1 oder 2, das außerdem vor dem Schritt der Bestimmung der minimalen und maximalen Grenzen eine Bestimmung von Übertragungsfunktionen, die die Werte von Strömen ($I_d$, $I_q$, $I_f$) für jedes Steuersignal ($V_d$, $V_q$, $V_f$) festlegen, und eine Bestimmung von die Übertragungsfunktionen einhüllenden Funktionen enthält, die von Parametern (a, k) abhängen, wobei die Parameter durch eine Kalibrierung bestimmt werden.

5. System zur Steuerung einer Antriebseinheit, die ein Kraftfahrzeug bestückt und einen mit einem Rotor und mit einem Stator versehenen Elektromotor, Einrichtungen zur Regelung der Ströme des Rotors und des Stators ($I_d$, $I_q$, $I_f$), die Steuersignale ($V_d$, $V_q$, $V_f$) an den Elektromotor liefern, wobei die zu regelnden Ströme und die Steuersignale in einem Bezugssystem ausgedrückt werden, das dreht und eine Vielzahl von Achsen (d, q, f) enthält, Einrichtungen zur Messung der Werte der Ströme des Rotors und des Stators, Einrichtungen zur Umwandlung dieser Messungen im drehenden Bezugssystem enthält, **dadurch gekennzeichnet, dass** es Einrichtungen zur Bestimmung von minimalen und maximalen Grenzen für jeden der Ströme abhängig von den Steuersignalen und Einrichtungen zum Vergleich der gemessenen Signale mit den minimalen und maximalen Grenzen enthält.

6. System nach Anspruch 5, wobei die Einrichtungen zur Bestimmung der minimalen und maximalen Grenzen ein Modell des Motors enthalten.

7. System nach Anspruch 5 oder 6, das Einrichtungen zur Lösung einer Gruppe von Gleichungen des Modells des Motors bei stabilisierter Drehzahl enthält.

8. System nach Anspruch 5 oder 6, das außerdem Einrichtungen zur Bestimmung von Übertragungsfunktionen, die die Werte von Strömen ($I_d$, $I_q$, $I_f$) für jedes Steuersignal ($V_d$, $V_q$, $V_f$) festlegen, und Einrichtungen zur Bestimmung von die Übertragungsfunktionen einhüllenden Funktionen enthält, die von Parametern (a, k) abhängen.

**Claims**

1. Method for controlling a power train equipping a motor vehicle and comprising an electric motor equipped with a rotor and a stator, said method comprising a regulation of the currents of the rotor and the stator ($I_a$, $I_q$, $I_f$) conveying control signals ($V_a$, $V_q$, $V_f$) to the electric motor, said currents to be regulated and said control signals being expressed in a rotating frame of reference comprising a plurality of axes (d, q, f), a measurement (E00) of the values of the currents of the rotor and the stator, a transformation (E12) of these measurements into said rotating frame of reference, **characterized in that** it comprises a determination (E11) of minimum and maximum bounds for each of the currents as a function of said control signals, and a comparison (E30) of the measured signals with said minimum and maximum bounds.

2. Method according to Claim 1, wherein the determination of the minimum and maximum bounds is implemented by means of a model of the motor.

3. Method according to Claim 1 or 2, furthermore comprising, prior to the step of determining the minimum and maximum bounds, the solving of equations of the model of the motor in steady state comprising a calibration step.

4. Method according to Claim 1 or 2, furthermore comprising, prior to the step of determining the minimum and maximum bounds, a determination of transfer functions setting the current values ($I_a$, $I_q$, $I_f$) for each control signal ($V_a$, $V_q$, $V_f$) and a determination of functions enveloping said transfer functions depending on parameters (a, k), said parameters being determined by calibration.

5. System for controlling a power train equipping a motor vehicle and comprising an electric motor equipped with a rotor and a stator, means for regulating the currents of the rotor and the stator ($I_a$, $I_q$, $I_f$) conveying control signals ($V_a$, $V_q$, $V_f$) to the electric motor, said currents to be regulated and said control signals being expressed in a rotating frame of reference comprising a plurality of axes (d, q, f), means for measuring the values of the currents of the rotor and the stator, means for transforming these measurements into said rotating frame of reference, **characterized in that** it comprises means for determining minimum and maximum bounds for each of the currents as a function of said control signals, and means for comparing the measured signals with said minimum and maximum bounds.

6. System according to Claim 5, wherein the means for determining the minimum and maximum bounds comprise a model of the motor.

7. System according to Claim 5 or 6, comprising means for solving a set of equations of the model of the motor in steady state.

8. System according to Claim 5 or 6, furthermore comprising means for determining transfer functions setting the current values ($I_a$, $I_q$, $I_f$) for each control signal ($V_a$, $V_q$, $V_f$) and means for determining functions enveloping said transfer functions depending on parameters (a, k).

# FIG.1

```
                    ┌──────────┐
                    │  Mesure  │──E00
                    └──────────┘
              ┌───────────┴───────────┐
              ▼                       ▼
       ╭─────────────╮        ╭──────────────╮
       │  Courants   │        │ Signaux de   │
       ╰─────────────╯        │  commande    │
              │               ╰──────────────╯
              ▼                       ▼
E12──┌──────────────────────┐  ┌──────────────────┐──E11
     │Transformation de Park│  │  Modèle Machine  │
     └──────────────────────┘  └──────────────────┘
              │                       ▼
              │               ╭──────────────╮
              │               │   Bornes     │
              │               │  courants    │
              │               ╰──────────────╯
              │                       │
              └───────────┬───────────┘
                          ▼
                  ┌──────────────┐
                  │ Comparaison  │──E30
                  └──────────────┘
                          ▼
                  ┌──────────────┐
                  │   Mesures    │──E40
                  │  validées ?  │
                  └──────────────┘
```

# FIG.2

# FIG.3

Diagramme de Bode

Legend: TF$_{dq}$, TF$_{qq}$, TF$_{fq}$

# FIG.4

Diagramme de Bode

Legend: TF$_{dq}$, TF$_{qq}$, TF$_q$, Fr$_q$, Fl$_q$

# FIG.5

Legend: Iq, Iq$_{min}$, Iq$_{max}$

Temps (s)

**RÉFÉRENCES CITÉES DANS LA DESCRIPTION**

**Documents brevets cités dans la description**

- JP 2001268980 A
- US 5047699 A
- US 20020008492 A
- EP 1311060 A

**Littérature non-brevet citée dans la description**

- **VASILE COROBAN-SCHRAMEL ; ION BOLDEA ; GHEORGHE-DANIEL ANDREESCU ; FREDE BLAABJERB.** Active-Flux-Based Motion-Sensorless Vector Control of Biaxial Excitation Generator/Motor for Automobiles. IEEE